# EUROPÄISCHE PATENTSCHRIFT

(11) **EP 1 672 386 B1**
(45) Veröffentlichungstag und Bekanntmachung des Hinweises auf die Patenterteilung: **15.08.2012**
(21) Anmeldenummer: 04030190.5
(22) Anmeldetag: 20.12.2004
(51) Int. Cl.: G01S 13/75, G01S 13/82, G01S 13/34

(54) **Dauerstrich-Radarsystem zur Abstandsmessung und Datenübertragung**
Continuous wave radarsystem for distance measurements and data transmission
Système radar à onde continue pour mesurer des distances et pour la transmission de données

(43) Veröffentlichungstag der Anmeldung: 21.06.2006
(73) Patentinhaber: SIEMENS AKTIENGESELLSCHAFT, 80333 München (DE)
(72) Erfinder: Gila, Janos, Dr., 2340 Mödling (AT); Konrad, Wolfgang, Dr., 2340 Mödling (AT)

(56) Entgegenhaltungen:
- EP-A- 1 233 316
- EP-A- 1 429 217
- DE-A1- 10 012 113
- DE-A1- 10 234 467
- DE-A1- 10 310 158
- US-A- 6 167 464

## Beschreibung

Die Erfindung betrifft ein Dauerstrich-Radarsystem mit einer Sende- und Empfangseinheit und zumindest einer Transpondervorrichtung, insbesondere zur Lokalisierung eines mobilen Bedien- und Beobachtungsgeräts.

Radarsysteme eignen sich zur berührungslosen Lokalisierung und Abstandsbestimmung von Objekten. Unter einer Vielzahl verschiedener Radarsysteme ermöglicht z.B. ein frequenzmodulierendes Dauerstrich-Radarsystem, welches auch als Frequency Modulated Continous Wave (FMCW) Radar bezeichnet wird, eine zuverlässige Abstandsbestimmung zwischen Objekten, die auch z.B. nur gering voneinander entfernt sind. Hierbei kommt typischerweise keine gepulste, sondern kontinuierliche, d.h. continuous wave (CW) Radarstrahlung zum Einsatz.

Beim frequenzmodulierten Dauerstrich-Radarsystem unterliegt die Frequenz der ausgesendeten Radarsignale einer periodischen Modulation, wodurch ausgesendete und von einem Objekt reflektierte Radarsignale beim Wiedereintreffen in das Radarsystem eine Frequenzverschiebung im Vergleich zu den gesendeten Radarsignalen aufweisen, die einem Laufzeitunterschied entspricht. Dieser Laufzeitunterschied gibt den zweifachen Abstand zwischen dem Sende- und Empfangsmodul und dem reflektierenden Objekt wieder.

Zur Lokalisierung oder Entfernungsbestimmung des reflektierenden Objekts werden empfangene Radarsignale im Empfangsmodul typischerweise einer spektralen Analyse unterzogen. Beispielsweise geben einzelne Peaks oder Spitzen im Leistungsspektrum der Frequenzverschiebung direkt Aufschluss über die Entfernung zwischen Sende- und Empfangsmodul und dem reflektierenden Objekt. So entsprechen z.B. große Frequenzverschiebungen großen Laufzeitunterschieden der Radarsignale und somit großen Entfernungen, während kleine Frequenzverschiebungen kleinen Laufzeitunterschieden und somit kleinen Entfernungen entsprechen.

Der Einsatz eines Radarsystems zur Abstandsbestimmung zu einem bestimmten Objekt ist mitunter problematisch, da vielfältige äußere Faktoren den Empfang reflektierter Radarsignale massiv beeinträchtigen oder stören können. Insbesondere in der Anwesenheit von reflektierenden Metalloberflächen oder Körpern die Radarstrahlen absorbieren ist es nur bedingt möglich, ein empfangenes Radarsignal einem bestimmten reflektierendem Objekt zuzuordnen. Unter Einsatz eines Transponders oder einer Transpondervorrichtung kann dieses Problem zumindest eingeschränkt werden.

Ein Transponder ist typischerweise in der Lage ein moduliertes Funkantwortsignal in Reaktion auf ein Abfragesignal zu senden. Ist der Empfänger des Radarsystems auf die Modulation des Funkantwortsignals abgestimmt, so können mit Hilfe geeigneter Filtermethoden die von einem Transponder gesendeten Funkantwortsignale deutlich von Hintergrund- und sonstigen Störsignalen getrennt und zur Abstandsbestimmung ausgewertet werden. Transponder können als passive oder auch als aktive, d.h. leistungsverstärkende Transponder, ausgebildet sein.

Die von einem Transponder modulierten Funkantwortsignale ermöglichen eine Abstandsbestimmung zwischen dem Transponder und dem Empfangsmodul des Radarsystems. Die Verwendung eines einzelnen Transponders erscheint nachteilig insbesondere im Hinblick auf sich fortlaufend ändernde Umgebungsbedingungen. Bewegen sich z.B. der Transponder und das Empfangsmodul des Radarsystems oder befinden sich absorbierende oder abschattende Körper temporär zwischen dem Transponder und dem Empfangsmodul, so ist der Empfang von Funkantwortsignalen sowie das Senden von Abfragesignalen an den Transponder massiv gestört, so dass eine Abstandsbestimmung unter Umständen nicht mehr möglich ist.

Für eine Lokalisierung bzw. Abstandsbestimmung zu einem großen räumlich ausgedehnten Objekt, wie z.B. einer Maschine, ist es zweckmäßig, mehrere Transponder um die Maschine herum anzuordnen, um somit zu gewährleisten, dass ein Austausch von Funksignalen zwischen dem Sende- und Empfangsmodul und mindestens einem Transponder jederzeit möglich ist. Eine räumlich verteilte Anordnung von verschiedenen Transpondern ist jedoch nachteilig für eine eindeutige und zuverlässige Abstandsbestimmung.

DE 103 10 158 beschreibt ein Zugangskontrollsystem für ein Objekt, umfassend mindestens eine Basiseinheit mit einer Sende- und Empfangseinrichtung, die ein breitbandig moduliertes Abfragesignal aussendet, mindestens ein Transponder, der eine Modulationseinrichtung aufweist, um auf ein in einer Entfernung zur Basisstation empfangenes Abfragesignal ein Hilfsträgersignal, dessen Frequenz in Abhängigkeit eines Codes zwischen einer endlichen Anzahl von Frequenzlagen umgetastet wird, aufzumodulieren und als codemoduliertes Antwortsignal zu reflektieren, eine Auswerteeinrichtung, die der Sende- und Empfangsrichtung nachgeschaltet ist und die das Antwortsignal in Seitenbändern der getasteten Frequenzlagen hinsichtlich Code und Entfernung auswertet.

DE 100 12 113 betrifft ein Verfahren und eine Vorrichtung zur Übertragung von Daten bzw. zur Messung des Abstands zwischen einer Basiseinheit und einer mobilen Schlüsseleinheit eines Zugangsberechtigungskontrollsystems. Zur Erhöhung der Sicherheit der Datenübertragung bzw. der Abstandsmessung wird dem gesendeten Signal (Datenübertragung) bzw. dem "reflektierten" Signal (Abstandsmessung) ein hochfrequentes Kennungssignal aufmoduliert oder hinzugefügt. In der das Signal empfangenden Einheit wird dieses zusätzlich zur Auswertung der Daten bzw. der Auswertung hinsichtlich des Abstandes auf das Vorhandensein des hochfrequenten Kennungssignals geprüft. Die Daten werden nur dann als zulässig erkannt bzw. die Auswertung hinsichtlich des Abstands wird nur dann durchgeführt oder deren Ergebnis als zulässig erkannt, wenn im Empfangssignal das Kennungssignal ausreichend mit einer in der empfangenden Einheit abgelegten Soll-Information übereinstimmt.

DE 102 34 467 beschreibt ein Verfahren zur automatisierten Steuerung einer technischen Anlagen mit einer Mehrzahl von zur Abwicklung von Prozessschritten datenseitig miteinander verschalteten Anlagenkomponenten, denen von einer zentralen Steuereinrichtung unter Berücksichtigung von dort eingehenden Prozessführungssignalen erzeugte Stellbefehle zugeführt werden. In einer mobilen Bedieneinheit erzeugte Prozessführungssignale werden drahtlos an Schnittstellen übertragen und von diesen an die Steuereinrichtung weitergeleitet. Dazu wird erfindungsgemäß eine Freigabe derjenigen Anlagenkomponenten, für die bei der Erzeugung der zugehörigen Stellbefehle die von der mobilen Bedieneinheit eingehenden Prozessführungssignale berücksichtigt werden, anhand eines Ortskennwerts für die mobile Bedieneinheit vorgenommen, zu dessen Ermittlung die drahtlos mit der mobilen Bedieneinheit kommunizierenden Schnittstellen genutzt werden.

EP 1 429 217 beschreibt eine Station, die insbesondere in einer Bearbeitungs- und Fertigungslinie angeordnet ist, mit mindestens einer Steuereinrichtung mit Bedienfeld für Anzeige-, Steuerungs- und/oder Diagnosefunktionen der Station. Das Bedienfeld ist portabel und kabellos mit mindestens einer Station bzw. Steuereinrichtung der Station und/oder einer zentralen Steuereinheit der Bearbeitungs- oder Fertigungslinie verbunden.

US 6,167,464 beschreibt ein HMI-Interface zur Durchführung von Bedienoperationen an einem räumlich verteilten Kontrollsystem in einer Fabrik.

Nach EP 1 233 316 werden allgemein verfügbare IT-Geräte als Einfach-HMI-Geräte verwendet. Hierbei kann den Bediener die nächstgelegene Automatisierungskomponente visuell angezeigt werden. Das Abarbeiten von Umrüstprozessen oder Serviceroutinen kann durch Workflows gesteuert und personenbezogene oder gerätespezifizische Zugangsrechte können vergeben werden.

Der Erfindung liegt somit die Aufgabe zu Grunde, ein Dauerstrich-Radarsystem so weiterzugestalten, dass ein von einem Empfangsmodul empfangenes Funkantwortsignal eindeutig einer Transpondervorrichtung zugeordnet werden kann, die dasjenige Funkantwortsignal aussendet.

Die Aufgabe wird mit dem in Patentanspruch 1 angegebenen Radarsystem sowie der in Ansprüch 5 bezeichneten Transpondervorrichtung und dem in Anspruch 6 bezeichneten HMI System gelöst. Weitere vorteilhafte Ausführungen der Erfindung sind in den Unteransprüchen angegeben.

Die Erfindung betrifft ein Dauerstrich-Radarsystem mit einem Sende- und Empfangsmodul und mit mindestens einer Transpondervorrichtung, die zum Senden eines Funkantwortsignals in Reaktion auf ein Abfragesignal ausgebildet ist. Das Dauerstrich-Radarsystem verfügt über Mittel zur Abstandsbestimmung zwischen dem Sende- und Empfangsmodul und der mindestens einen Transpondervorrichtung mit Hilfe einer ersten Modulation des Funkantwortsignals. Ferner verfügt das Dauerstrich-Radarsystem über Mittel zur Datenübertragung zwischen der mindestens einen Transpondervorrichtung und dem Sende- und Empfangsmodul. Diese Datenübertragung erfolgt mit Hilfe einer zweiten Modulation des Funkantwortsignals.

Beim erfindungsgemäßen Dauerstrich-Radarsystem kommen zwei unterschiedliche Modulationsverfahren für das Funkantwortsignal zum Einsatz. Die erste Modulation des Funkantwortsignals ermöglicht dem Empfangsmodul aus einer Vielzahl empfangener Radarsignale nur solche Radarsignale selektiv auszuwählen, die von der mindestens einen Transpondervorrichtung mit der ersten Modulation moduliert wurden und daher geeignet sind, eine Abstandsbestimmung zwischen dem Sende- und Empfangsmodul und der Transpondervorrichtung durchzuführen.

Die Abstandsbestimmung selbst erfolgt durch spektrale Analyse und der Bestimmung einer Frequenzverschiebung des Funkantwortsignals bezüglich eines vom Sende- und Empfangsmodul ausgesendeten Abfragesignals.

Die zweite Modulation des Funkantwortsignals ermöglicht eine Datenübertragung zwischen der mindestens einen Transpondervorrichtung und dem Sende- und Empfangsmodul. Zur Rekonstruktion der mit Hilfe des Funkantwortsignals übermittelten Daten verfügt das Sende- und Empfangsmodul über eine entsprechende Demodulationseinheit. Das erfindungsgemäße Dauerstrich-Radarsystem ermöglicht somit nicht nur eine Abstandsbestimmung zwischen Sende- und Empfangsmodul und mindestens einer Transpondervorrichtung, sondern auch eine Datenübertragung mit Hilfe des Funkantwortsignals. Eine bestehende Infrastruktur zum Senden und Empfangen von Radarsignalen kann somit effizient und gleichzeitig für mehrere Zwecke, nämlich Abstandsbestimmung und Datenübertragung, eingesetzt werden.

Bei einer weiteren Ausführungsform der Erfindung sind die Mittel zur Datenübertragung zur Übertragung einer für die mindestens eine Transpondervorrichtung spezifischen Signalfolge ausgebildet. Mit Hilfe dieser spezifischen Signalfolge kann schließlich im Sende- und Empfangmodul eine eindeutige Zuordnung des Funkantwortsignals zu einer der mindestens einen Transpondervorrichtung erfolgen. Dies ist besonders vorteilhaft, wenn beim Radarsystem mehrere Transpondervorrichtungen zum Einsatz kommen, die räumlich verteilt sind. Typischerweise ist die erste Modulation des Funkantwortsignals für jede der Transpondervorrichtungen gleich, wodurch die beim Empfangsmodul ankommenden Funkantwortsignale ununterscheidbar sind.

Mit Hilfe der zweiten Modulation kann jedes, von einer Transpondervorrichtung ausgesendete, Funkantwortsignal mit einer Signalfolge oder Informationssequenz moduliert werden, die für jede der Transpondervorrichtungen verschieden ist und somit ermöglicht, die unterschiedlichen Funkantwortsignale den unterschiedlichen Transpondervorrichtungen zuzuordnen. Die für eine Transpondervorrichtung spezifische Signalfolge ist hierbei vorzugsweise im Voraus festgelegt und bleibt während des Betriebs des Radarsystems unveränderlich.

Sind ferner die absoluten Positionen der unterschiedlichen Transpondervorrichtungen bekannt, so kann unter Auswertung von Funksignalen mit einer unterschiedlichen spezifischen Signalfolge nicht nur eine Abstandsbestimmung, sondern sogar eine absolute Positionsbestimmung oder Lokalisierung des Sende- und Empfangsmoduls durchgeführt werden. Durch Empfang, Zuordnung und Auswertung von beispielsweise drei verschiedenen Funkantwortsignalen, die von drei verschiedenen Transpondervorrichtungen gesendet werden, ist eine absolute Positionsbestimmung des Sende- und Empfangsmoduls in einer Ebene möglich.

Erfindungsgemäß ist die erste Modulation des Funkantwortsignals eine Phasenmodulation mit einer ersten Modulationsfrequenz. Liegt die Trägerfrequenz der Abfrageund Funkantwortsignale beispielsweise im ISM-Band im GHz-Bereich, so ist eine erste Modulationsfrequenz im Bereich einiger KHz bis MHz zweckmäßig.

Erfindungsgemäß ist die zweite Modulation eine Amplitudenmodulation mit einer zweiten Modulationsfrequenz, die kleiner als die erste Modulationsfrequenz der Phasenmodulation ist. Somit stellt die zweite Modulation, d.h. die Amplitudenmodulation, eine Einhüllende für die erste Modulation des Funkantwortsignals dar. Aufgrund der Frequenzunterschiede der ersten und zweiten Modulation sowie unterschiedlicher Modulationsverfahren können die beiden Modulationen im Empfangsmodul hinreichend voneinander getrennt werden. Die Abstandsbestimmung wird daher durch die zweite Modulation, die der Datenübertragung dient, nur geringfügig beeinflusst.

Bei einer weiteren vorteilhaften Ausführungsform der Erfindung verfügt das Sende- und Empfangsmodul über einen Mischer zur Erzeugung eines reellen Signals aus einem empfangenen Funkantwortsignal. Des Weiteren verfügt das Sende- und Empfangsmodul über eine Auswerteeinheit zur Abstandsbestimmung mit Hilfe des vom Mischer erzeugten reellen Signals. Außerdem verfügt das Sende- und Empfangsmodul über eine Demodulationseinheit zur Decodierung der durch das Funkantwortsignal übertragenen Daten auf der Grundlage des reellen Signals. Vorzugsweise erfolgt die komplette Signalauswertung empfangener Funkantwortsignale auf der Basis reeller Signale, so dass auf Auswertemittel zur Analyse komplexer Signale verzichtet werden kann. Dies ermöglicht insbesondere, das Sende- und Empfangsmodul platzsparend und kostengünstig zu realisieren.

Der Mischer ist dazu ausgebildet, das empfangene Funkantwortsignal mit dem Sendesignal zu mischen, wodurch ein Nutzsignal mit einer Frequenz erzeugt wird, die der Frequenz der ersten Modulation entspricht. Das Spektrum dieses reellen Nutzsignals kann dann durch die Auswerteeinheit zur Abstandsbestimmung genutzt werden.

Bei einer weiteren Ausführungsform der Erfindung wird das Funkantwortsignal kontinuierlich mit der ersten Modulation moduliert. Zusätzlich kann das Funkantwortsignal nach vorbestimmten Zeitintervallen mit der zweiten Modulation moduliert werden. Diese zweite Amplitudenmodulation wird somit zeitweilig dem phasenmodulierten Funkantwortsignal überlagert. Innerhalb der Zeitintervalle in denen die zweite Modulation auf das Funkantwortsignal angewendet wird, kann eine Datenübertragung und somit eine Identifizierung des sendenden Transponders stattfinden.

In den verbleibenden Zeitintervallen, in denen das Funkantwortsignal lediglich mit der ersten Modulation moduliert ist, kann lediglich eine Auswertung empfangener Signale zur Abstandsbestimmung erfolgen. Diese Abstandsbestimmung kann jedoch mit größerer Genauigkeit erfolgen, da durch die zweite Modulation unweigerlich das Signal zu Rauschverhältnissen der empfangenen Funkantwortsignale verschlechtert wird. Vorzugsweise wird daher die Abstandsbestimmung und die Decodierung übertragener Daten sequentiell im Empfangsmodul durchgeführt. Sie kann jedoch auch simultan erfolgen, wenn beispielsweise das Funkantwortsignal kontinuierlich mit der ersten und zweiten Modulation moduliert ist.

Erfindungsgemäß ist die erste Modulation durch eine Binary Phase Shift Keying (BPSK) Modulation und die zweite Modulation durch eine On/Off-Keying Modulation ausgebildet. Die Kombination dieser beiden Modulationstechniken ermöglicht insbesondere eine Auswertung zur Abstandsbestimmung und Decodierung übertragener Daten mit Hilfe des vom Mischer erzeugten reellen Signals. Die On/Off-Keying Modulation ermöglicht eine binäre Codierung der zu übertragenen Information, die gänzlich in der Signalamplitude des Funkantwortsignals codiert ist. Die somit erzeugte Bit-Sequenz ist somit unempfindlich bezüglich etwaiger Phasenänderungen des Trägersignals, die durch die Frequenzabtastung oder Sweep des FMCW- Radars hervorgerufen werden. Typischerweise ist die Frequenz der On/Off-Keying Modulation (OOK) weitaus geringer als die Frequenz der BPSK Modulation und vorzugsweise sogar geringer, als die Frequenz, die durch den Laufzeitunterschied zwischen Sende- und Empfangsmodul und Transponder entsteht.

Mit Hilfe der OOK Modulation wird im Prinzip das BPSK modulierte Signal an- und ausgeschaltet. Die Sequenz dieser Einund Ausschaltvorgänge kann z.B. mit Hilfe eines Golay Codes oder anderer vergleichbarer Codierungen codiert sein, um etwaige Bitfehler leicht korrigieren zu können. In denjenigen Zeitintervallen, in denen die OOK Modulation eine logische Eins vorgibt, ist das Funkantwortsignal lediglich mit der ersten Modulation, d.h. mit der BPSK Modulation, moduliert.

In einem weiteren Aspekt betrifft die Erfindung eine Transpondervorrichtung für ein Dauerstrich-Radarsystem, welches über ein Sende- und Empfangsmodul verfügt. Die Transpondervorrichtung ist zum Senden eines Funkantwortsignals in Reaktion auf ein Abfragesignal ausgebildet und verfügt über eine erste Modulationseinheit, die zu einer ersten Modulation des Funkantwortsignals ausgebildet ist. Die Transpondervorrichtung hat ferner eine zweite Modulationseinheit, die zu einer zweiten Modulation des Funkantwortsignals ausgebildet ist. Die erste Modulation des Funkantwortsignals ist als eine Phasenmodulation realisiert, die eine Unterscheidung zwischen einem von einer Transpondervorrichtung reflektierten Funkantwortsignal und einem von einem beliebigen Objekt reflektierten Funksignal ermöglicht. Die zweite Modulation ist als eine Amplitudenmodulation ausgebildet, die eine Datenübertragung von der Transpondervorrichtung zum Sende- und Empfangsmodul ermöglicht.

In einem weiteren Aspekt betrifft die Erfindung ein Human-Machine-Interface (HMI) System mit zumindest einem mobilen Bedien- und Beobachtungsgerät für die Automatisierungskomponenten einer technischen Anlage und mit einem frequenzmodulierenden Dauerstrich-Radarsystem zur Lokalisierung des mobilen Bedien- und Beobachtungsgeräts. Das Radarsystem hat ein Sende- und Empfangsmodul sowie mindestens eine Transpondervorrichtung und verfügt über Mittel zur Abstandsbestimmung zwischen dem mobilen Bedien- und Beobachtungsgerät und der mindestens einen Transpondervorrichtung mit Hilfe einer ersten Modulation eines von der Transpondervorrichtung gesendeten Funkantwortsignals. Weiterhin verfügt das Dauerstrich-Radarsystem über Mittel zur Datenübertragung zwischen der mindestens einen Transpondervorrichtung und dem Sende- und Empfangsmodul mit Hilfe einer zweiten Modulation des Funkantwortsignals.

Bevorzugte Ausführungsformen der Erfindung werden nachfolgend anhand der Zeichnungen näher erläutert. Es zeigen:
- Figur 1: ein schematisches Blockdiagramm des Radarsystems,
- Figur 2: Diagramm zur Modulation des Funkantwortsignals,
- Figur 3: Diagramme zur Datenübertragung und Demodulation übermittelter Daten,
- Figur 4: ein Blockdiagramm des HMI Systems,
- Figur 5: ein Blockdiagramm der Struktur einer Transpondervorrichtung und einem Sende- und Empfangsmodul.

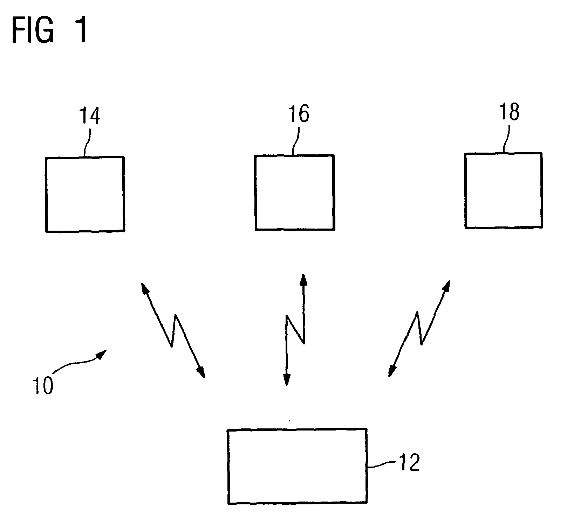

Figur 1 zeigt ein schematisches Blockdiagramm des erfindungsgemäßen Radarsystems 10, welches über beispielsweise drei Transponder 14, 16, 18 und ein Sende- und Empfangsmodul 12 verfügt. Das Sende- und Empfangsmodul 12 ist dazu ausgebildet, Abfragesignale auszusenden, die von den Transpondern 14, 16, 18 empfangen, moduliert, gegebenenfalls verstärkt und als Funkantwortsignal wieder zurückgesendet werden. Die Trägerfrequenz der Abfrage bzw. Funkantwortsignale bleibt hierbei unverändert und liegt typischerweise im GHz-Bereich, z.B. im ISM-Band.

Das erfindungsgemäße Radarsystem ist als frequenzmodulierendes Dauerstrich-Radarsystem, insbesondere für Anwendungen im Nahbereich ausgebildet. Das Dauerstrich-Radarsystem wird daher auch als Short-Range Frequency Modulated continuous wave (FMCW) Radar bezeichnet. Die Trägerfrequenz des Abfragesignals, das von dem Sende- und Empfangsmodul ausgesendet wird, unterliegt einer kontinuierlichen, vorzugsweise linearen oder dreieckförmigen Modulation. Da die Transponder 14, 16, 18 das Funkantwortsignal unter Beibehaltung der Trägerfrequenz generieren, weisen die beim Sende- und Empfangsmodul 12 eintreffenden Funkantwortsignale eine Frequenzverschiebung im Vergleich zum Abfragesignal des Sende- und Empfangsmoduls auf.

Diese Frequenzverschiebung entspricht einem Laufzeitunterschied der Radarsignale und stellt daher einen Abstand zwischen dem Sende- und Empfangsmodul und zumindest einem der Transponder 14, 16,18 dar. Für eine bessere Unterscheidung zwischen Funkantwortsignalen und Signalen, die an anderen beliebigen Objekten reflektiert werden, unterliegen die von den Transpondern 14, 16, 18 ausgesendeten Funkantwortsignale einer ersten Modulation mit einer Subträgerfrequenz. Die so modulierten Funkantwortsignale werden im Sende- und Empfangsmodul 12 mit dem Abfragesignal gemischt und somit auf die Subträgermodulation umgesetzt. Mit entsprechenden Filtern können somit störende Hintergrundsignale effektiv beseitigt werden.

Diese erste Subträgermodulation wird in allen drei Transpondern 14, 16, 18 gleichermaßen durchgeführt. Sie erlaubt lediglich eine Trennung zwischen Signalen, die von Transpondern ausgesendet werden und Signalen, die z.B. an Metalloberflächen reflektiert werden. Typischerweise wird das erfindungsgemäße Dauerstrich-Radarsystem zur Lokalisierung des Sendeund Empfangsmoduls verwendet. Hierzu befinden sich die Transponder 14, 16, 18 an vorbestimmten Referenzpunkten und sind räumlich voneinander getrennt. Da nun mit Hilfe der ersten Modulation auf Basis empfangener Funkantwortsignale nicht unterschieden werden kann, von welchem der drei Transponder 14, 16, 18 ein empfangenes Funkantwortsignal ausgesendet wird, ermöglicht das erfindungsgemäße Radarsystem, die Funkantwortsignale einer zweiten Modulation zu unterziehen, die eine Datenübertragung zwischen einer Transpondervorrichtung 14, 16, 18 und dem Sende- und Empfangsmodul 12 ermöglicht.

Erfindungsgemäß erfolgt diese zweite Modulation mittels On/Off-Keying (OOK). Diese ermöglicht, dass das Funkantwortsignal mit einer binären Sequenz ein- oder ausgeschaltet wird. Somit kann ein informationstragender zeitlicher Code auf der Basis des Funkantwortsignals von einer der Transpondervorrichtungen 14, 16, 18 zum Sende- und Empfangsmodul 12 übertragen werden. Die codierte Information enthält vorzugsweise einen Identifizierungscode, der für jede Transpondervorrichtung 14, 16, 18 fest vorgegeben ist. Das Sende- und Empfangsmodul verfügt über entsprechende Demodulationsmittel und ist daher in der Lage, ein empfangenes Funkantwortsignal eindeutig zu einer der drei gezeigten Transpondervorrichtungen 14, 16, 18 zuzuordnen.

Werden z.B. mehrere Funkantwortsignale von verschiedenen Transpondern 14, 16, 18 empfangen und ausgewertet, so können die gewonnenen Abstandsdaten unter Kenntnis der Positionen der einzelnen Transponder 14, 16, 18 für eine genaue Lokalisierung oder Positionsbestimmung des Sende- und Empfangsmoduls effektiv genutzt werden.

Ein weiterer Vorteil des erfindungsgemäßen Dauerstrich-Radarsystems besteht darin, dass selbst bei einer Unterbrechung oder teilweisen Abschattung einer Funkübertragung zwischen dem Sende- und Empfangsmodul 12 und z.B. dem Transponder 18, nach wie vor Funkantwortsignale von den verbleibenden Transpondern 14 und 16 empfangen und ausgewertet werden können. Das Dauerstrich-Radarsystem erfordert lediglich den Empfang von Funkantwortsignalen von mindestens einem Transponder, um zumindest einen Abstand zwischen Sende- und Empfangsmodul 12 und einem der Transponder 14, 16, 18 berechnen zu können.

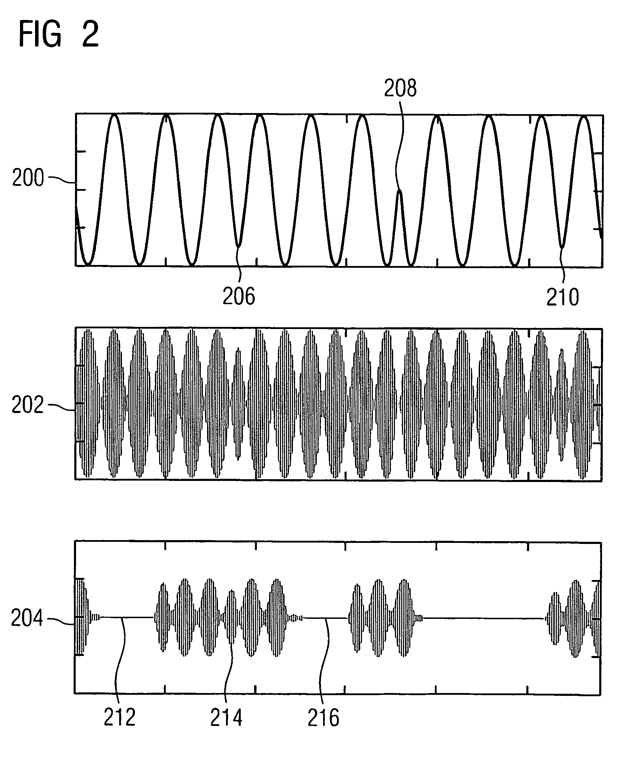

Figur 2 zeigt drei Diagramme 200, 202, 204, die die beiden Modulationen des Funkantwortsignals schematisch darstellen. Diagramm 200 zeigt die Einhüllende einer Phasenmodulation über die Zeit, die durch das FMCW- Prinzip mit Dreiecksmodulation im Sende- und Empfangsmodul entstehen. An den Punkten 206, 208 und 210 sind jeweils Phasensprünge zu erkennen, die auf die Dreiecksmodulation zurückzuführen sind. Die Frequenz dieser Einhüllenden entspricht dem doppelten Abstand zwischen Sende- und Empfangsmodul und Transponder.

Diagramm 202 zeigt die Einhüllende und die Subträgermodulation des Trägersignals. Die Auswirkungen der Phasensprünge bei 206 und 210 im Diagramm 200 sind ebenso im Diagramm 202 deutlich erkennbar. Die Einhüllende erreicht hierbei nicht ihre Maximal- bzw. Minimal-Amplitude.

Diagramm 204 spiegelt schließlich das Resultat der zweiten Modulation wieder. In diesem Fall wird eine On/Off-Keying Modulation (OOK) dem im Diagramm 202 dargestellten Signal überlagert. Mit Hilfe der OOK-Modulation wird das phasenmodulierte Signal einer Amplitudenmodulation unterzogen, wodurch verschiedene Bereiche 212, 214, 216 im Signal entstehen, die entweder eine vernachlässigbar kleine Amplitude 212, 216 oder einen Amplitudenverlauf 214 aufweisen, der den ursprünglichen Verlauf des phasenmodulierten Signals entspricht.

Die im Diagramm 202 dargestellte Phasenmodulation wird durch eine Binary Phase Shift Keying (BPSK) Modulation realisiert. Beim im Diagramm 202 dargestellten Binary Phase Shift Keying wechselt die Phase des Trägersignals zwischen 0° und 180° mit der Subträgermodulationsfrequenz. Die Frequenz liegt typischerweise im Bereich einiger kHz bis MHz, wenn das Trägersignal im GHz-Bereich, wie z.B. dem ISM Band liegt.

Ein vom Sende- und Empfangsmodul empfangenes Funkantwortsignal kann durch einen Mischprozess mit dem Sendesignal auf die Subträgermodulation umgesetzt werden. Somit können sämtliche empfangene Signale, die keine dem im Diagramm 202 entsprechende Modulation aufweisen, effektiv aus den empfangenen Signalen herausgefiltert werden. Auf diese Art und Weise wird sichergestellt, dass lediglich Funkantwortsignale, die von Transpondern erzeugt wurden, zur Signalauswertung gelangen.

Die OOK Modulation erlaubt eine binäre zeitliche Codierung des Funkantwortsignals. Diese Codierung kann z.B. mit Hilfe eines Golay Codes realisiert werden. Vorzugsweise wird die OOK Modulation nur temporär auf das Funkantwortsignal angewendet. Auf diese Art und Weise kann mit Hilfe eines im Diagramm 202 gezeigten Signals zuerst eine Abstandsbestimmung durchgeführt werden und danach bei vorhandener OOK Modulation der ermittelte Abstand einem bestimmten Transponder zugeordnet werden. Dies hat den Vorteil, dass das phasenmodulierte Funkantwortsignal kontinuierlich für die Abstandsbestimmung übertragen wird. Bei kontinuierlicher Anwendung beider Modulationsverfahren kommt es unweigerlich durch das zeitweilige Ausschalten des Funkantwortsignals zu einem Übertragungsverlust, der mitunter die Genauigkeit der Abstandsmessung beeinträchtigen kann. Wenn das Signal zu Rausch Verhältnis (SNR) der empfangenen Funkantwortsignale hinreichend groß ist, sind diese Auswirkungen der OOK Modulation für die Abstandsbestimmung vernachlässigbar.

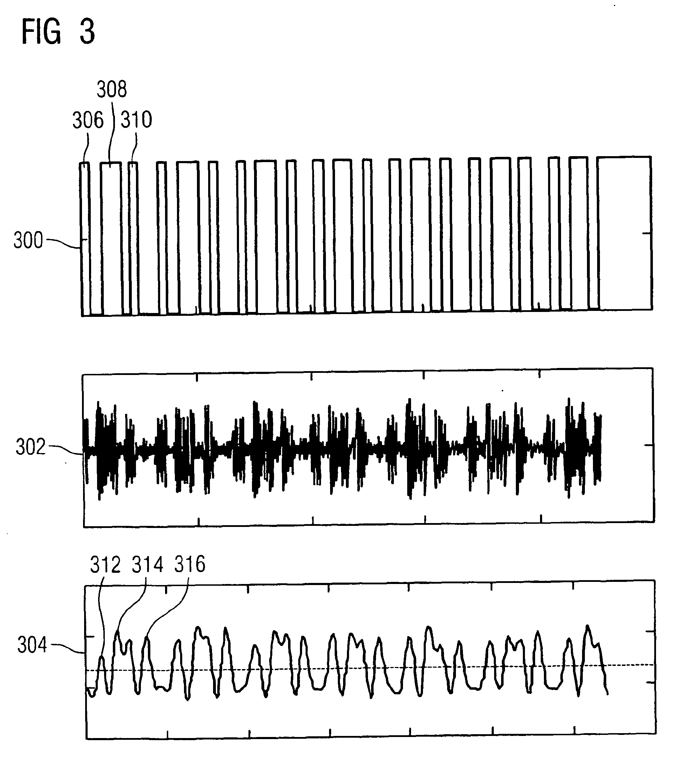

Figur 3 zeigt drei Diagramme 300, 302, 304 einer Demodulation einer durch OOK Modulation übertragenen Bit-Sequenz. Die ursprüngliche Bit-Sequenz ist im Diagramm 300 dargestellt. Die einzelnen Bits sind z.B. 306, 308, 310. Diese stellen eine Eins in der zeitlichen Bit-Sequenz dar. Dazwischen hat die Bit-Sequenz den Wert Null, wobei 308 zwei aufeinanderfolgende Einsen darstellt. Diagramm 302 zeigt das hierzu entsprechende Empfangssignal, welches durch Rauschen und durch eine Mehrwege-Ausbreitung verzerrt ist. Die einzelnen Bits 306, 308, 310 spiegeln sich hier in den Bereichen großer Signalamplitude wieder.

Diagramm 304 zeigt schließlich das demodulierte Empfangssignal. Die einzelnen Spitzen 312, 314, 316 entsprechen hierbei den ursprünglichen Bits 306, 308, 310. Das demodulierte Signal ist ferner tiefpassgefiltert, um die hochfrequenten Anteile des im Diagramm 302 dargestellten Signals herauszufiltern. Die gestrichelte Linie 318 stellt z.B. eine Schwelle dar, oberhalb derer die Signalamplitude des Signals im Diagramm 304 einer binären Eins und unterhalb einer binären Null entspricht. Führt man eine entsprechende Entscheidungs- Prozedur, z.B. mittels eines Komparators, mit dem im Diagramm 304 dargestellten Signal durch, so erhält man die im Diagramm 300 gezeigte Bit-Sequenz.

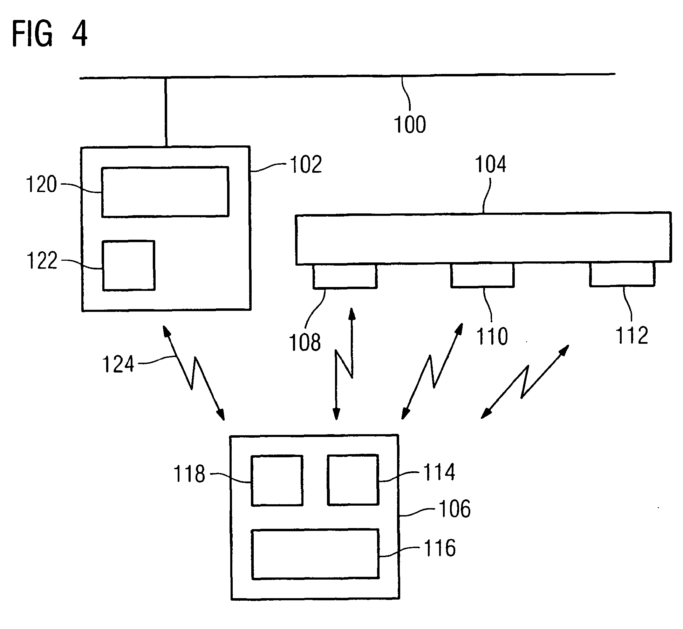

Figur 4 zeigt beispielhaft eine technische Anlage 104 mit technischen Betriebsmitteln für die das erfindungsgemäße Radarsystem eingesetzt werden kann. Die technischen Betriebsmittel sind z.B. Bestandteil einer fertigungs- oder prozesstechnischen Vorrichtung. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens einen Transponder. Vorzugsweise verfügt die Anlage über eine Reihe von Transpondern 108, 110, 112, die an verschiedenen Referenzpunkten an der technischen Anlage 104 angebracht sind. Die Transponder sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung von den Transpondern 108, 110, 112 selbsttätig durchzuführen. Die Transponder 108, 110, 112 müssen hierbei keine Signalauswertung vornehmen.

Das Lokalisierungsmodul 114 ist vorzugsweise mit dem erfindungsgemäßen short-range FMCW-Radar ausgestattet und die einzelnen Transponder 108, 110, 112 sind zur Modulation empfangener Radarsignale und zum Reflektieren daraus resultierender modulierter Radarsignale ausgebildet. Mittels einer von den Transpondern 108, 110, 112 durchgeführten SubträgerModulation können die von den Transpondern reflektierten Radarsignale selektiv ausgewertet werden. Die SubträgerModulation ermöglicht somit eine Trennung von Hintergrundsignalen und Signalen, die an den Transpondern reflektiert wurden. Durch eine entsprechende Subträger-Filterung im Lokalisierungsmodul 114 kann somit mit Hilfe des FMCW-Radars, eine eindeutige Entfernungsmessung für quasistationäre Ziele sogar mit einem Empfänger der lediglich für eine reelle Signalauswerten ausgelegt ist im Lokalisierungsmodul 114 realisiert werden.

Quasistationär bedeutet in diesem Zusammenhang, dass während der Messzeit, die typischerweise im Bereich einiger ms bis einiger 10 ms liegt, sich die Position der Transponder bzw. die Position des Radarsystems nicht verändert.

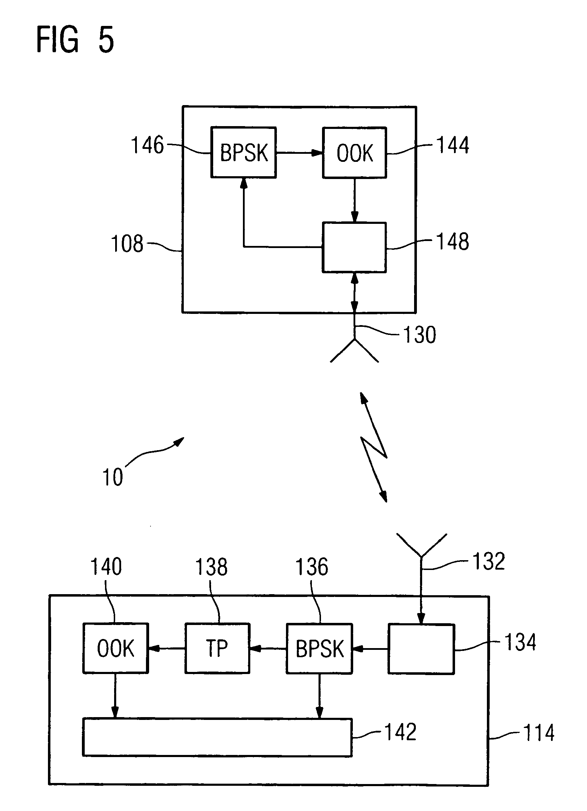

Figur 5 zeigt ein detaillierteres Blockdiagramm des erfindungsgemäßen Radarsystems 10, das aus einem Transponder 108 und einem, in einem Lokalisierungsmodul 114 implementierten Sende- und Empfangsmodul besteht. Der Transponder 108 hat eine Antenne 130, ein Kopplungsmodul 148 sowie zwei Modulationseinheiten 144, 146. Die Modulationseinheit 146 ist z.B. als BPSK Modulationseinheit ausgestattet und Modulationseinheit 144 als OOK Modulationseinheit. Von der Antenne 130 empfangene Abfragesignale werden vom Koppler 148 an die BPSK Modulationseinheit 146 weitergeleitet. Dort wird das empfangene Abfragesignal mit der Subträgerfrequenz phasenmoduliert und an die OOK Modulationseinheit 144 übergeben. Diese führt die erwähnte OOK Amplitudenmodulation des Signals aus und übergibt das zweifach modulierte Signal an den Koppler 148 der das von der OOK Modulationseinheit 144 gelieferte Signal in die Antenne 130 einkoppelt, damit diese das zweifach modulierte Signal als Funkantwortsignal zum Lokalisierungsmodul 114 senden kann.

Während die BPSK Modulation kontinuierlich durchgeführt wird, kann es zweckmäßig sein, dass die OOK Modulation nur zeitweilig dem Funkantwortsignal aufgeprägt wird. Die durchzuführende Abstandsmessung und eine Demodulation einer durch OOK Modulation aufgeprägten Bit-Sequenz erfolgt dann sequentiell. Ein rein BPSK moduliertes Signal kann somit zur Abstandsbestimmung mit einer großen Genauigkeit herangezogen werden, während ein BPSK und OOK moduliertes Signal immer verlustbehaftet ist. Allerdings kann bei einem hinreichend guten Signal zu Rausch Verhältnis eine zeitgleiche Modulation die Kommunikations- und Messzeit reduzieren.

Das Sende- und Empfangsmodul des Radarsystems 10 ist hier im Lokalisierungsmodul 114 des mobilen Bedien- und Beobachtungsgeräts implementiert. Das Lokalisierungsmodul 114 verfügt über eine Antenne 132, einen Mischer 134, eine BPSK Demodulationseinheit 136, einen Tiefpassfilter 138, eine OOK Demodulationseinheit 140 sowie eine Auswerteeinheit 142. Mit Hilfe des Mischers 134 wird das empfangene Funkantwortsignal auf die Subträgerfrequenz der BPSK Modulation umgesetzt. Das Ausgangssignal des Mischers 134 ist vorzugsweise ein reelles Signal, wodurch auf eine komplexe Signalauswertung eine aufwändige Hardware-Implementierung zur komplexen Signalauswertung verzichtet werden kann. Dies ermöglicht insbesondere einen kompakten und kostengünstigen Aufbau des Lokalisierungsmoduls 114. Das BPSK Modul 136 ist unter anderem zur spektralen Analyse des empfangenen Funkantwortsignals ausgebildet. Die Lage einzelner Leistungsspitzen des Spektrums entsprechen Abstandsinformationen zwischen dem Transponder 108 und dem Lokalisierungsmodul 114. Das gewonnene Spektrum wird schließlich vom BPSK Modul 136 in die Auswerteeinheit 142 eingespeist.

Das vom Mischer 134 erzeugte reelle Signal kann schließlich direkt oder aber über das BPSK Modul 136 in den Tiefpassfilter 138 eingespeist werden. Der Tiefpassfilter hat die Funktion, die hochfrequenten Anteile des reellen Empfangssignals herauszufiltern und nur die niederfrequenten Anteile, die der OOK Modulation entsprechen, an die OOK Demodulationseinheit 140 weiterzuleiten. Die OOK Demodulationseinheit 140 ist ferner dazu ausgebildet, aus dem gefilterten Funkantwortsignal ein in Figur 3 im Diagramm 304 dargestelltes demoduliertes Signal zu erzeugen. Die Demodulationseinheit 140 ist ferner dazu ausgebildet, dieses demodulierte Signal 304 an die Auswerteeinheit 142 weiterzuleiten. Optional kann die Demodulationseinheit 140 auch mit einem Komparator oder mit einem Analog Digital Wandler ausgestattet sein, der das demodulierte Signal 304 wieder in eine binäre Sequenz umsetzt. Die Zuordnung der demodulierten Bit-Sequenz zu einer Transpondervorrichtung 108 erfolgt schließlich in der Auswerteeinheit 142.

## Patentansprüche

1. Dauerstrich Radarsystem (10) mit
- einem Sende- und Empfangsmodul (12),
- mehreren Transpondervorrichtungen (14, 16, 18; 108, 110, 112), die jeweils zum Senden eines Funkantwortsignals in Reaktion auf ein vom Sende- und Empfangsmodul ausgesendetes Abfragesignal ausgebildet ist,
- Mitteln zur Abstandsbestimmung zwischen dem Sende- und Empfangsmodul und den Transpondervorrichtungen mit Hilfe einer ersten Modulation (202) der Funkantwortsignale,
- Mitteln zur Übertragung von Informationssequenzen zwischen den Transpondervorrichtungen und dem Sende- und Empfangsmodul mit Hilfe einer zweiten Modulation (204) der Funkantwortsignale, wobei jede der Informationssequenzen für jede der Transpondervorrichtungen verschieden ist, **dadurch gekennzeichnet daß** jede der Informationssequenzen des Funkantwortsignals eindeutig zu einer der Transpondervorrichtungen zuordenbar ist, und
die erste Modulation (202) durch eine Binary Phase Shift Keying (BPSK) Modulation und die zweite Modulation durch eine ON/OFF-Keying Modulation (204) ausgebildet ist.

2. Radarsystem (10) nach Anspruch 1, wobei die erste Modulation eine erste Modulationsfrequenz und die zweite Modulation (204) eine zweite Modulationsfrequenz aufweist, und wobei die zweite Modulationsfrequenz kleiner als die erste Modulationsfrequenz ist.

3. Radarsystem (10) nach einem der Ansprüche 1 oder 2, wobei das Sende- und Empfangsmodul (12) über
- einen Mischer (134) zur Erzeugung eines reellen Signals aus einem empfangenen Funkantwortsignal,
- eine Auswerteeinheit (142) zur Abstandsbestimmung mit Hilfe des reellen Signals,
- eine Demodulationseinheit (140) zur Dekodierung der durch das Funkantwortsignal übertragenen Daten mit Hilfe des reellen Signals,
verfügt.

4. Radarsystem (10) nach einem der Ansprüche 1 bis 3, wobei das Funkantwortsignal kontinuierlich mit der ersten Modulation (202) und zusätzlich mit der zweiten Modulation (204) modulierbar ist.

5. Transpondervorrichtung (14, 16, 18; 108, 110, 112) zum Senden eines Funkantwortsignals in Reaktion auf ein Abfragesignal für ein Dauerstrich Radarsystem (10), wobei das Dauerstrich Radarsystem ein Sende- und Empfangsmodul (12) hat, die Transpondervorrichtung mit
- einer ersten Modulationseinheit (146), die zu einer ersten Modulation (202) des Funkantwortsignals zur Abstandsbestimmung zwischen dem Sende- und Empfangsmodul und der Transpondervorrichtung ausgebildet ist,
- einer zweiten Modulationseinheit (144), die zu einer zweiten Modulation (204) des Funkantwortsignals zur Übertragung einer Informationssequenz zwischen der Transpondervorrichtung und dem Sende- und Empfangsmodul ausgebildet ist, **dadurch gekennzeichnet daß** die Informationssequenz des Funkantwortsignals eindeutig zu der Transpondervorrichtungen zuordenbar ist,
die erste Modulation (202) durch eine Binary Phase Shift Keying (BPSK) Modulation und die zweite Modulation durch eine ON/OFF-Keying Modulation (204) ausgebildet ist.

6. Human-Machine-Interface System mit zumindest einem mobilen Bedien- und Beobachtungsgerät (106) für die Automatisierungskomponenten (102) einer technischen Anlage (104) und mit einem Dauerstrich Radarsystem nach Anspruch 1 zur Lokalisierung des mobilen Bedien- und Beobachtungsgerät.

## Claims

1. Continuous wave radar system (10) having
- a transmit and receive module (12),
- several transponder apparatuses (14, 16, 18; 108, 110, 112), each of which is embodied to transmit a radio response signal in response to a query signal sent by the transmit and receive module,
- means for determining the distance between the transmit and receive module and the transponder apparatuses with the aid of a first modulation (202) of the radio response signals,
- means for transmitting information sequences between the transponder apparatuses and the transmit and receive module with the aid of a second modulation (204) of the radio response signals, wherein each of the information sequences is different for each of the transponder apparatuses,
**characterized in that**
each of the information sequences of the radio response signal can be uniquely assigned to one of the transponder apparatuses, and
the first modulation (202) is embodied by a binary phase shift keying (BPSK) modulation and the second modulation by an ON/OFF-keying modulation (204).

2. Radar system (10) according to claim 1, wherein the first modulation has a first modulation frequency and the second modulation (204) has a second modulation frequency, and wherein the second modulation frequency is smaller than the first modulation frequency.

3. Radar system (10) according to one of claims 1 or 2, wherein the transmit and receive module (12) has
- a mixer (134) for generating a real signal from a received radio response signal,
- an evaluation unit (142) for determining the distance with the aid of the real signal,
- a demodulation unit (140) for decoding the data transmitted by the radio response signal with the aid of the real signal.

4. Radar system (10) according to one of claims 1 to 3, wherein the radio response signal can be continuously modulated with the first modulation (202) and also with the second modulation (204).

5. Transponder apparatus (14, 16, 18; 108, 110, 112) for transmitting a radio response signal in response to a query signal for a continuous wave radar system (1), wherein the continuous wave radar system has a transmit and receive module (12), the transponder apparatus having
- a first modulation unit (146), which is embodied for a first modulation (202) of the radio response signal to determine the distance between the transmit and receive module and the transponder apparatus,
- a second modulation unit (144), which is embodied for a second modulation (204) of the radio response signal to transmit an information sequence between the transponder apparatus and the transmit and receive module, **characterized in that** the information sequence of the radio response signal can be uniquely assigned to the transponder apparatuses,
the first modulation (202) is embodied by a binary phase shift keying (BPSK) modulation and the second modulation by an ON/OFF keying modulation (204).

6. Human-machine interface system having at least one mobile control and monitoring device (106) for the automation components (102) of a technical system (104) and having a continuous wave radar system according to claim 1, for localising the mobile control and monitoring device.

## Revendications

1. Système ( 10 ) radar à ondes continues, comprenant
- un module ( 12 ) d'émission et de réception,
- plusieurs dispositifs ( 14, 16, 18 ; 108, 110, 112 ) de transpondeur, qui sont constitués respectivement pour l'émission d'un signal radio de réponse en réaction à un signal d'interrogation émis par le module d'émission et de réception,
- des moyens de détermination de la distance entre le module d'émission et de réception et les dispositifs de transpondeur à l'aide d'une première modulation ( 202 ) des signaux radio de réponse,
- des moyens de transmission de séquences d'information entre les dispositifs de transpondeur et le module d'émission et de réception à l'aide d'une deuxième modulation ( 204 ) des signaux radio de réponse, dans lequel chacune des séquences d'information est différentes pour chacun des dispositifs de transpondeur, **caractérisé en ce que** chacune des séquences d'information du signal radio de réponse peut être associée d'une manière univoque à l'un des dispositifs de transpondeur, et
la première modulation ( 202 ) est constituée par une modulation Binary Phase Shift Keying ( BPSK ) et la deuxième modulation est constituée par une modulation ( 204 ) ON/OFF-Keying.

2. Système ( 10 ) radar suivant la revendication 1, dans lequel la première modulation a une première fréquence de modulation et la deuxième modulation ( 204 ) a une deuxième fréquence de modulation et dans lequel la deuxième fréquence de modulation est plus basse que la première fréquence de modulation.

3. Système ( 10 ) radar suivant l'une des revendications 1 à 2, dans lequel le module ( 12 ) d'émission et de réception dispose
- d'un mélangeur ( 134 ) de production d'un signal réel à partir d'un signal radio de réponse reçu,
- d'une unité ( 142 ) d'exploitation pour la détermination de la distance à l'aide du signal réel,
- d'une unité ( 140 ) de démodulation pour le décodage à l'aide du signal réel des données transmises par le signal radio de réponse.

4. Système ( 10 ) radar suivant l'une des revendications 1 à 3, dans lequel le signal radio de réponse peut être modulé en continu par la première modulation ( 202 ) et supplémentairement par la deuxième modulation ( 204 ).

5. Dispositif ( 14, 16, 18 ; 108, 110, 112 ) de transpondeur pour l'émission d'un signal radio de réponse en réaction un signal d'interrogation pour un système ( 10 ) radar à ondes continues, dans lequel le système radar à ondes continues a un module ( 12 ) d'émission et de réception, le dispositif transpondeur ayant
- une première unité ( 146 ) de modulation qui est conformée pour une première modulation ( 202 ) du signal radio de réponse en vue de la détermination de la distance entre le module d'émission et de réception et le dispositif de transpondeur,
- une deuxième unité ( 144 ) de modulation qui est conformée pour une deuxième modulation ( 204 ) du signal radio de réponse en vue de la transmission d'une séquence d'information entre le dispositif de transpondeur et le module d'émission et de réception, **caractérisé en ce que** la séquence d'information du signal radio de réponse peut être associée de manière univoque à un dispositif de transpondeur,
la première modulation ( 202 ) est constituée par une modulation Binary Phase Shift Keying ( BPSK ) et la deuxième modulation est constituée par une modulation ( 204 ) ON/OFF-Keying.

6. Système d'interface homme-machine ayant au moins un appareil ( 106 ) mobile de commande et d'observation des composants ( 102 ) d'automatisation d'une installation ( 104 ) technique et un système de radar à ondes continues suivant la revendication 1 pour la localisation de l'appareil mobile de commande et d'observation.
